# EUROPÄISCHE PATENTANMELDUNG

(11) **EP 4 664 398 A1**
(43) Veröffentlichungstag der Anmeldung: **17.12.2025**
(21) Anmeldenummer: 25181347.3
(22) Anmeldetag: 06.06.2025
(51) Int. Cl.: G06T 7/00, G06T 7/11, G06T 7/55, A61B 5/00, G01J 3/28

(54) **VERFAHREN UND VORRICHTUNG ZUR ZUORDNUNG MINDESTENS EINES TUMORRELEVANTEN SEGMENTIERUNGSWERTES ZU JEWEILS EINEM OBERFLÄCHENPUNKT EINER BIOPSIE-PROBE ANHAND HYPERSPEKTRALER INTENSITÄTSWERTE**

(30) Priorität: 12.06.2024 DE 102024116433
(71) Anmelder: Universitätsklinikum Jena, 07747 Jena (DE)
(72) Erfinder: BALI, Ayman, 07749 Jena (DE); PERTZBORN, David, 07743 Jena (DE)
(74) Vertreter: Liedtke & Partner Patentanwälte

(57) **Zusammenfassung**

Die Erfindung betrifft ein Verfahren zur Zuordnung mindestens eines tumorrelevanten Segmentierungswertes zu jeweils einem Oberflächenpunkt einer Biopsie-Probe (P). Deren Oberfläche wird mit einer Hyperspektral-Imaging (HSI) Kamera (11) mindestens teilweise dreidimensional und multispektral erfasst. Es werden mehrere Hypercubes (H) in jeweils einer Kamerabildebene erfasst. Zu jedem Hypercube (H) wird ein reflektives Intensitätsbild erfasst oder aus dem Hypercube (H) ermittelt. Aus der Mehrzahl der reflektiven Intensitätsbilder wird durch ein Verfahren der fotogrammetrischen Rekonstruktion ein dreidimensionales optisches Biopsie-Modell (M1) generiert. Ein Hypercube (H) wird mittels einer mit einem Verfahren des maschinellen Lernens trainierten Auswerteeinheit (12) in jeweils eine Segmentierungskarte (S) transformiert, die jedem Pixel der Kamerabildebene des Hypercubes (H) einen tumorrelevanten Segmentierungswert zuordnet. Die Segmentierungswerte der Segmentierungskarten (S) werden auf jeweils denjenigen Oberflächenpunkt des optischen Biopsie-Modells (M1) übertragen, der gemäß der fotogrammetrischen Rekonstruktion dem jeweiligen Pixel der Kamerabildebene zugeordnet ist.

Ferner betrifft die Erfindung eine Vorrichtung zur Durchführung dieses Verfahrens.

## Beschreibung

Die Erfindung betrifft ein Verfahren zur Zuordnung mindestens eines tumorrelevanten Segmentierungswertes zu jeweils einem Oberflächenpunkt einer dreidimensionalen Biopsie-Probe anhand hyperspektraler Intensitätswerte. Ferner betrifft die Erfindung eine Vorrichtung zur Durchführung eines solchen Verfahrens.

Bei der operativen Behandlung von Tumoren spielt die vollständige Entfernung des Tumors eine entscheidende Rolle für eine positive Prognose. Für die vollständige Entfernung des Tumors ist insbesondere eine korrekte Erkennung der Tumorgrenzen notwendig.

Ein etabliertes Verfahren zur Erkennung der Tumorgrenzen ist die intraoperative Schnellschnittdiagnostik, bei der eine entnommene Probe stichprobenartig einem beschleunigten histopathologischen Verfahren unterzogen wird, während der Patient unter Narkose verbleibt. Dieses Verfahren weist jedoch nur eine begrenzte Zuverlässigkeit und Genauigkeit bei der Erkennung der Tumorgrenzen auf, erfordert die Anwesenheit eines Pathologen bei der Operation und potenziell das Pausieren der Operation bis zum Vorliegen der Ergebnisse der Schnellschnittdiagnostik.

Alternativ wurde der Einsatz von bildgebenden, spektrometrischen, spektrografischen und weiteren medizintechnischen Verfahren vorgeschlagen, beispielsweise Verfahren basierend auf Fluoreszenz, Mikroskopie, Ultraschall, Radiografie, optischer Kohärenztomografie, Magnetresonanztomografie, elastischer Streuungsspektroskopie, Bio-Impedanz, Röntgencomputertomografie, Massenspektrometrie, Raman-Spektroskopie, nuklearmedizinischer Bildgebung, Terahertz imaging, photoakustischer Bildgebung oder Messung des pH-Wertes.

Aus dem Stand der Technik sind zudem bildgebende Verfahren des Hyperspektral-Imaging (HSI) bekannt, bei denen spektrale Informationen in mehreren Kanälen, denen jeweils ein Spektralbereich zugeordnet ist, in einem Datensatz erfasst werden, der als Hypercube bezeichnet wird. Ein solcher Hypercube erfasst für eine Mehrzahl von spektralen Kanälen jeweils eine auf den jeweiligen Spektralbereich bezogene örtliche (zweidimensionale) Intensitätsverteilung und lässt sich somit als ein dreidimensionaler Datensatz auffassen. Dabei wird jeder Kamerakoordinate (das heißt: jedem Pixel) eines Hypercubes eine vollständige spektrale Information bezogen auf einen Wellenlängenbereich zugeordnet.

Anhand von Hypercubes können Proben unterschieden und/oder klassifiziert werden, die mit herkömmlichen Farbbildgebungsmethoden nicht oder nicht zuverlässig unterscheidbar sind. Verfahren des HSI werden beispielsweise für die Fernerkundung, die Lebensmittelinspektion, Materialuntersuchungen im Recycling, für die Forensik, die Fälschungserkennung sowie für biomedizinische Anwendungen eingesetzt.

In der Medizin sind sowohl in-vivo als auch ex-vivo Anwendungen des HSI bekannt. Es ist bekannt, dass Tumorzellen aufgrund ihrer gegenüber gesunden Zellen anderen molekularen Zusammensetzung anhand ihrer spektralen Eigenschaften identifiziert werden können. HSI weist hierbei den Vorteil auf, dass es nicht-invasiv und nichtionisierend ist und keine Farbstoffe benötigt, um signifikante strukturelle Unterschiede zu erfassen. Abhängig von der verwendeten Wellenlänge des Lichtes, das zur Belichtung von Gewebe eingesetzt wird, können Eindringtiefen von mehreren Millimetern erzielt werden.

Die Kombination von in-vivo HSI mit Verfahren des maschinellen Lernens zur schnelleren und genaueren Erkennung von Tumoren ist beispielsweise aus den Veröffentlichungen Eggert, D., et al., In vivo detection of head and neck tumors by hyperspectral imaging combined with deep learning methods. J Biophotonics, 2022. 15(3), Ma, L., et al., Adaptive deep learning for head and neck cancer detection using hyperspectral imaging. Vis Comput Ind Biomed Art, 2019. 2(1): p. 18 und Francesca, M., et al. Automated tumor assessment of squamous cell carcinoma on tongue cancer patients with hyperspectral imaging. in Proc.SPIE. 2019 bekannt.

Während die Anwendung von HSI in-vivo vielversprechend für die Detektion von Gewebeveränderungen ist, besteht die Herausforderung darin, dass der Chirurg nach der Entfernung von der gemessenen Stelle keine Orientierung zur untersuchten Stelle hat. Außerdem wird die in-vivo Messung lediglich an der Oberfläche durchgeführt. Chirurgen stoßen häufiger auf Schwierigkeiten in tiefen Bindegewebsschichten, die Ränder oder Übergänge von Tumorgewebe zu gesundem Gewebe zu detektieren, im Vergleich zu oberflächlichen Schleimhautschichten. Daraus ergibt sich der Wunsch, nicht nur die oberflächlichen Schleimhautschichten zu messen, sondern auch die tieferen Gewebeschichten zu erfassen. Als Lösung bietet sich die ex-vivo Messung der entnommenen Biopsie an, da auf diese Weise die Probe vollständig in der Tiefe reseziert und anschließend gemessen wird.

Angesichts der Stabilität von Biopsie-Proben und der Abwesenheit von Herausforderungen, wie einer Fehlregistrierung einzelner Bilder in einem HSI-Hypercube aufgrund des Herzschlags des Patienten, eines Bildrauschens und spiegelnder Reflexionen, ist es möglich, HSI anzuwenden, um mesoskopische und mikroskopische HSI-Systeme mit hoher räumlicher und spektraler Auflösung zu schaffen.

Die Erforschung potenzieller Zusammenhänge zwischen hyperspektralen ex-vivo Messungen und histologischen Testergebnissen war Gegenstand mehrerer Untersuchungen. Durch eine schnellere Diagnose würde HSI die Wirksamkeit der Behandlung steigern, indem es die Notwendigkeit histologischer Untersuchungen beseitigt und Zeit spart, indem es Gewebeänderung korrekt definiert.

Während einer Operation kann eine Biopsie-Probe mit einem HSI-basierten Diagnoseverfahren direkt untersucht werden. Derzeit erfordert die Untersuchung von Biopsie-Proben eine histologische Untersuchung, die mindestens mehrere Stunden dauert. Übliche Verfahren der intraoperativen Schnellschnittdiagnostik dauern zwischen 20 Minuten und 30 Minuten, sind jedoch mit einer Ungenauigkeit verbunden.

Demgegenüber kann HSI das Gewebe in wenigen Minuten bewerten und ermöglicht es festzustellen, ob die Ränder von Resektionsbereichen noch Tumorzellen enthalten oder nicht. Wie auch bei der in-vivo Methodik und der Schnellschnittdiagnostik beruhen diese Ergebnisse jedoch auf einzelnen Ansichten oder Schnitten der Probe. Hierdurch geht einerseits die räumliche Orientierung teilweise verloren und andererseits erfolgt die Bewertung der Tumorränder nur ausschnittsweise.

Die umfangreiche Menge an generierten, in den Hypercubes erfassten Daten stellt eine erhebliche Herausforderung für eine manuelle Interpretation dar. Es sind Verfahren der Merkmalsextraktion bekannt, mit denen die Dimensionalität von HSI-Daten unter Beibehaltung diagnoserelevanter Informationen reduziert werden kann, beispielsweise Hauptkomponentenanalyse, Spektrum-Unmixing, Spektralwinkel-Mapping und statistische Analysetechniken. Zudem wurden Verfahren des maschinellen Lernens, insbesondere als Deep Learning bezeichnete Verfahren zur Analyse von HSI Daten entwickelt. Beispielsweise wurden Faltungsnetzwerke (Convolutional Neural Networks, CNN) für die Klassifizierung und Regression von hyperspektralen Daten vorgeschlagen.

Die Anwendung der HSI-Technologie sowohl in-vivo (intraoperativ) als auch ex-vivo (mikroskopisch und mesoskopisch) und die Auswertung so gewonnener Hypercube-Daten durch maschinelles Lernen hat sich als vielversprechend für die Detektion von Tumoren erwiesen. Eine bedeutende Herausforderung in beiden Ansätzen besteht darin, dass es bisher nicht möglich ist, die Orientierung der Messung an der entnommenen Probe auf die Situation in-vivo zurückzuführen. Zusätzlich weisen diese Ansätze das Problem auf, dass das Gewebe nur an der Oberfläche der Resektion gemessen wird und dadurch keine Information über tiefe Gewebsschichten möglich ist.

Es besteht daher Bedarf an einem Verfahren, mit den aus intraoperativ entnommenen Biopsie-Proben durch HSI dreidimensionale Modelle zu gewinnen und in ihrer ursprünglichen Orientierung relativ zum Patienten (das heißt: relativ zu der in-situ Situation) zu erfassen und darzustellen.

Die Veröffentlichung Sancho, Jaime et al. SLIMBRAIN: augmented reality real-time acquisition and processing system for hyperspectral classification mapping with depth information for in-vivo surgical procedures. Journal of Systems Architecture, 2023, Vol. 140 (2023) beschreibt ein Verfahren zur Überlagerung von tumorrelevanten Indikatorwerten über in Echtzeit gewonnenen Farbbildern eines neurochirurgischen Operationsfeldes. Die tumorrelevanten Indikatorwerte werden aus HSI-Aufnahmen einer HSI-Kamera gewonnen. Die Farbbilder werden mit einer Farbkamera aufgenommen. Zusätzlich werden den Pixeln der Farbbilder Tiefenwerte zugeordnet, die mit einer LiDAR Kamera erfasst werden. Dadurch wird eine stereoskopische Bilddarstellung ermöglicht, die als Augmented Reality (AR) Darstellung dem Farbbild überlagert wird.

Die Veröffentlichung Wisotzky, Eric et al.: Interactive and multimodal-based augmented reality for remote assistance using a digital surgical microscope. 2019 IEEE Conference on Virtual Reality and 3D User Interfaces (VR). IEEE, 2019, S. 1477 - 1484 beschreibt ein Verfahren zur Überlagerung mehrerer Bildmodalitäten in einer AR Darstellung und/oder in einer Mixed Reality (MR) Darstellung. Das Verfahren verwendet bei verschiedenen Beobachtungswellenlängen erfasste Bilder zur Klassifikation von Gewebestrukturen und kombiniert diese spektralen Daten mit metrischen 3D Informationen.

Das Dokument WO 2023/141216 A2 beschreibt ein bildgebendes System umfassend eine Mehrzahl von Bildsensoren, die zum Empfangen von Licht eingerichtet sind, das von einem Gewebebereich in mindestens einem ersten vorbestimmten Wellenlängenbereich reflektiert wird. Das bildgebende System umfasst ferner mindestens eine Verarbeitungseinheit, die dafür eingerichtet ist, die Aufnahme von Bildern durch die Bildsensoren auszulösen und korrespondierende Mengen von Pixeln in den aufgenommenen Bildern zu identifizieren, wobei jede Menge von Pixeln ein Pixel eines ersten Bildes eines ersten Bildsensors und ein Pixel eines zweiten Biles eines zweiten Bildsensors umfasst. Die Verarbeitungseinheit ist dafür eingerichtet, einen Unterschied in den Tiefenwerten zu ermitteln, die den Pixelmengen jeweils zugeordnet sind, und daraus ein dreidimensionales Modell des Gewebebereichs zu generieren.

Die Veröffentlichung Kho, Esther et al.: Hyperspectral imaging for resection margin assessment during cancer surgery. Clinical cancer research, 2019, Vo. 25, Nr. 12, S. 3572-3580 beschreibt ein Verfahren zur Analyse von histologischen Gewebeschnitten mit hyperspektraler Bildgebung (HSI). Es wird eine Klassifikation der HSI Bilder bezogen auf einzelne Gewebeschnitte mittels einer Support Vector Machine (SVM) untersucht und die Tauglichkeit der HSI Technologie für einen klinischen Einsatz bewertet.

Der Erfindung liegt die Aufgabe zu Grunde, ein verbessertes Verfahren zur Zuordnung mindestens eines tumorrelevanten Segmentierungswertes zu jeweils einem Oberflächenpunkt einer Biopsie-Probe anzugeben, das besonders leicht und flexibel in einen chirurgischen Workflow, insbesondere bei der Tumorresektion, integrierbar ist. Diese Aufgabe wird mit einem Verfahren mit den Merkmalen des Anspruchs 1 erfindungsgemäß gelöst.

Der Erfindung liegt ferner die Aufgabe zu Grunde, eine Vorrichtung zur Durchführung eines solchen Verfahrens anzugeben. Diese Aufgabe wird mit einer Vorrichtung mit den Merkmalen des Anspruchs 8 erfindungsgemäß gelöst.

Vorteilhafte Ausgestaltungen der Erfindung sind Gegenstand der Unteransprüche.

In einem chirurgischen Workflow wird eine Biopsie-Probe entnommen. Nachfolgend wird mindestens einem Oberflächenpunkt einer Biopsie-Probe ein tumorrelevanter Segmentierungswert zugeordnet.

Gemäß einem ersten Aspekt der Erfindung wird bei einem Verfahren zur Zuordnung mindestens eines tumorrelevanten Segmentierungswertes zu jeweils einem Oberflächenpunkt mit einer HSI-Kamera die Oberfläche der Biopsie-Probe mindestens teilweise dreidimensional und multispektral erfasst, indem mehrere Hypercubes in jeweils einer Kamerabildebene erfasst werden.

Ein Hypercube ordnet jeweils einem Pixel der Kamerabildebene eine Mehrzahl von spektralen Intensitätswerten innerhalb eines spektralen Erfassungsbereichs zu. Ein spektraler Intensitätswert wird in Abhängigkeit von einer Wellenlänge als Strahlungsintensität ermittelt, die von der Biopsie-Probe summarisch über eine gewisse Eindringtiefe hinweg emittiert oder reflektiert wird. Die auf einen Oberflächenpunkt der Biopsie-Probe bezogene Eindringtiefe hängt von der Wellenlänge ab, für welche die Strahlungsintensität ermittelt wird. Im Allgemeinen nimmt die Eindringtiefe mit zunehmender Wellenlänge zu und liegt für einen Wellenlängenbereich von zwischen 750 Nanometern bis 1000 Nanometern, abhängig vom Gewebe, bei einigen Millimetern.

Zu jedem Hypercube wird ein reflektives Intensitätsbild erfasst oder aus dem Hypercube ermittelt. Ein reflektives Intensitätsbild ordnet jeweils einem Pixel der Kamerabildebene einen reflektiven Intensitätswert zu, beispielsweise einen Grauwert oder einen Farbwert umfassend einen Rot- einen Grün- und einen Blau-Wert.

Die mehreren Hypercubes und somit auch die korrespondierend dazu aufgenommenen oder daraus ermittelten reflektiven Intensitätsbilder werden aus verschiedenen Positionen und/oder in verschiedenen Ausrichtungen der HSI-Kamera (und somit auch der Kamerabildebene) erfasst. Die Positionen und Ausrichtungen können in vorteilhafter Weise so gewählt werden, dass die Oberfläche der Biopsie-Probe mindestens über einen Teilbereich (das heißt über einen Raumwinkelbereich hinweg) von der Gesamtheit der mehreren Hypercubes vollständig erfasst wird. Aus der Mehrzahl der reflektiven Intensitätsbilder wird durch ein Verfahren der fotogrammetrischen Rekonstruktion ein dreidimensionales optisches Biopsie-Modell generiert, das einem von mindestens einem Hypercube erfassten Oberflächenpunkt der Biopsie-Probe jeweils einen reflektiven Intensitätswert zuordnet. Derartige fotogrammetrische Rekonstruktionsverfahren zur Modellierung einer dreidimensionalen Teiloberfläche sind aus dem Stand der Technik bekannt.

Besonders vorteilhaft werden die Hypercubes so aufgenommen, dass jeweils mindestens zwei Hypercubes einen gemeinsamen (überlappenden) Teilbereich der Oberfläche der Biopsie-Probe überdecken. Dadurch wird eine fotogrammetrische Rekonstruktion des dreidimensionalen optischen Biopsie-Modells erleichtert und/oder verbessert. Rein beispielhaft kann die HSI Kamera translatorisch und/oder in gewissen Winkelschritten um die Biopsie-Probe herum bewegt und jeweils auf die Biopsie-Probe ausgerichtet werden, wobei die translatorischen Schritte und die Winkelschritte ausreichend klein gewählt sind, um eine Überdeckung der Teilbereiche der Oberfläche sicherzustellen, die von benachbarten Positionen der HSI Kamera aus erfasst werden. Dadurch kann eine nahezu vollständige Rekonstruktion der Oberfläche der Biopsie-Probe mit hoher Genauigkeit und Zuverlässigkeit erreicht werden.

Alternativ zu einer Bewegung der HSI Kamera um die Biopsie-Probe kann auch die Biopsie-Probe bewegt, beispielsweise gedreht werden. Auch eine Bewegung sowohl der HSI Kamera als auch der Biopsie-Probe (beispielsweise eine lineare, scannende Bewegung der HSI Kamera und eine Drehbewegung der Biopsie-Probe) ist möglich.

Ein erfasster Hypercube wird mit einer Auswerteeinheit, die mit einem Verfahren des maschinellen Lernens trainiert (das heißt: in ihren Parametern angepasst) wurde, in jeweils eine Segmentierungskarte transformiert, die jedem Pixel der Kamerabildebene des Hypercubes einen tumorrelevanten Segmentierungswert zuordnet.

Ein Segmentierungswert kann als skalarer Wert zugeordnet werden, der ein Maß für die Wahrscheinlichkeit oder Zuverlässigkeit angibt, mit der derjenige Ort der Oberfläche der Biopsie-Probe, der dem jeweiligen Pixel der Kamerabildebene entspricht, als tumorös anzusehen ist. Alternativ kann ein Segmentierungswert auch als kategorialer Wert zugeordnet werden, der einer vorbestimmten, abzählbaren Menge von Kategorien entnommen ist, beispielsweise den Kategorien "tumoröses Gewebe", "tumorfreies Gewebe" und "Hintergrund". Ein Segmentierungswert kann auch als Kombination von skalaren und/oder kategorialen Werten zugeordnet werden.

Abhängig von dem Bereich von Wellenlängen, die in den Hypercubes erfasst werden, kann sich die Zuordnung des Segmentierungswertes auf einen nur oberflächlichen Bereich der Biopsie-Probe beziehen. Insbesondere dann, wenn in dem Hypercube längerwelliges Licht, beispielsweise aus einem spektralen Erfassungsbereich von zwischen 750 Nanometern bis 1000 Nanometern, erfasst wird, kann sich die Zuordnung des Segmentierungswertes aber auch auf einen oberflächennahen Bereich beziehen, der sich (von der Oberfläche der Biopsie-Probe ausgehend) bis in eine Tiefe von einigen Millimetern, beispielsweise bis in eine Tiefe von zwischen einem und drei Millimetern, erstreckt.

In einen nachfolgenden Schritt werden die in der Segmentierungskarte korrespondierend zu einem Hypercube erfassten Segmentierungswerte auf jeweils einen Oberflächenpunkt des optischen Biopsie-Modells übertragen, der gemäß der fotogrammetrischen Rekonstruktion dem jeweiligen Pixel der Kamerabildebene zugeordnet ist. Mit anderen Worten: dem dreidimensionalen, durch die fotogrammetrische Rekonstruktion aus den reflektiven Intensitätsbildern gewonnenen optischen Biopsie-Modell werden Segmentierungswerte überlagert, die das Vorhandensein tumorösen Gewebes am jeweiligen Oberflächenpunkt einschließlich der vom spektralen Erfassungsbereich abhängigen Eindringtiefe markieren.

Das vorgeschlagene Verfahren ermöglicht eine einfache und flexible Integration in den chirurgischen Workflow, insbesondere bei einer Tumorresektion. Die Erfassung der Hypercubes und reflektiven Intensitätsbilder und die Gewinnung des optischen Biopsie-Modells ist innerhalb weniger Minuten, typischerweise innerhalb von zehn Minuten möglich. Durch die Zuordnung von Segmentierungswerten zu diesem optischen Biopsie-Modell kann eine intraoperative histologische Diagnostik eingespart werden. Dadurch kann die Operationsdauer verkürzt werden.

Insbesondere ermöglicht die Überlagerung der Segmentierungswerte auf dem optischen Biopsie-Modell eine besonders leichte Orientierung und den Abgleich mit der in-vivo Situation, insbesondere dann, wenn die Oberfläche der Biopsie-Probe gesamthaft oder zu einem erheblichen Anteil über die mehreren Hypercubes erfasst wurde. Dadurch erhält der Operateur mit dem optischen Biopsie-Modell einen geometrischen, dreidimensionalen Eindruck, der die Herstellung des Bezugs zu der in-vivo Situation gegenüber einer nur zweidimensionalen Darstellung tumorrelevanter Segmentierungswerte (bezogen auf nur eine einzige Ansicht auf die Biopsie-Probe) erleichtert. Dem Operateur wird gegenüber einer histologischen Diagnostik eine schnellere Entscheidungsfindung hinsichtlich einer Nachresektion ermöglicht. Zudem können auch tieferliegende Bereiche der Biopsie-Probe (abhängig von dem spektralen Erfassungsbereich der HSI-Kamera) in die Entscheidungsfindung einbezogen werden.

Zusätzlich zu der bereits beschriebenen Klassifikationsphase umfasst das Verfahren eine Trainingsphase. In der Trainingsphase wird aus der dreidimensionalen Biopsie-Probe durch ein histologisches Schnittverfahren eine Mehrzahl von koplanar angeordneten, vorzugsweise äquidistant beabstandeten histologischen Schnitten gewonnen.

Aus einem histologischen Schnitt wird durch Färben und Scannen jeweils ein Schnittbild gewonnen. Den Pixeln der Schnittbilder wird durch Annotation jeweils ein tumorrelevanter Segmentierungswert zugeordnet. Aus den mit Segmentierungswerten annotierten Schnittbildern wird ein dreidimensionales histologisches Biopsie-Modell gewonnen. Das dreidimensionale histologische Biopsie-Modell ordnet somit Punkten oder Raumbereichen (Voxeln) des Volumens der Biopsie-Probe jeweils einen tumorrelevanten Segmentierungswert zu.

Die Auswerteeinheit wird mit einem Verfahren des maschinellen Lernens derart angepasst, dass einem am Eingang der Auswerteeinheit präsentierten Hypercube eine Segmentierungskarte mit tumorrelevanten Segmentierungswerten zugeordnet wird, die mit den Segmentierungswerten des dreidimensionalen histologischen Schnittmodells nach einem vorbestimmten Lernfehlerkriterium bestmöglich übereinstimmt.

Mit einer solchen Trainingsphase kann ein adaptierbarer (trainierbarer) Klassifikator für eine robuste und zuverlässige Zuordnung von Segmentierungswerten anhand der spektralen Charakteristik des untersuchten Gewebes gewonnen werden. Die Trainingsphase kann örtlich und zeitlich unabhängig von der Klassifikationsphase durchgeführt werden, beispielsweise durch Nutzung von Rechenressourcen, die skalierbar über Cloud-Dienste bereitgestellt werden. Dadurch ist das Verfahren besonders flexibel und mobil einsetzbar.

Für die Trainingsphase können bereits vorhandene Biopsie-Proben oder darauf basierende Daten genutzt werden. Zudem ist eine Annotation durch verschiedene, unabhängige Verfahren möglich, beispielsweise durch unabhängige Pathologen oder durch andere maschinelle Annotationsverfahren. Verschiedenste Ausprägungsformen maschinellen Lernens, beispielsweise überwachtes Lernen oder bestärkendes Lernen (Reinforcement Learning) sind möglich. Dadurch kann eine besonders hohe Zuverlässigkeit der Zuordnung von Segmentierungswerten erzielt werden.

Für die histologischen Schnitte können verschiedene Schnittverfahren, beispielsweise Kryoschneiden durch eine tiefgefrorene Biopsie-Probe oder Schneiden durch eine Formalin-fixierte Paraffin-eingebettete Biopsie-Probe eingesetzt werden. Vorrichtungen zur präzisen Durchführung solcher Schnittverfahren sind weit verbreitet und kostengünstig verfügbar.

Bei einer Ausführungsform des Verfahrens wird für jedes Intensitätsbild die Lage und/oder Ausrichtung der Biopsie-Probe relativ zu einem Kamera-Koordinatensystem der HSI-Kamera erfasst. Das dreidimensionale optische Biopsie-Modell wird aus der Mehrzahl der Intensitätsbilder durch ein Verfahren der fotogrammetrischen Rekonstruktion unter Berücksichtigung dieser Lage und/oder Ausrichtung ermittelt. Dadurch ist eine besonders einfache und zuverlässige fotogrammetrische Rekonstruktion möglich, die eine besonders genaue Zuordnung von Segmentierungswerten relativ zu dem optischen Biopsie-Modell, und somit auch bezogen auf die in-situ Situation erlaubt.

Bei einer Ausführungsform des Verfahrens wird der spektrale Erfassungsbereich der HSI-Kamera (das heißt: der Bereich von Wellenlängen, über dem der Hypercube jeweils ermittelt wird) abhängig von einer vorgegebenen Eindringtiefe bestimmt. Dadurch wird in Abhängigkeit von dem Gewebe der Biopsie-Probe und/oder der Art der Tumorresektion eine besonders zuverlässige Entscheidung über eine Nachresektion ermöglicht.

Bei einer Weiterbildung dieser Ausführungsform wird der spektrale Erfassungsbereich für eine oberflächennahe hyperspektrale Erfassung als Teilbereich eines Wellenlängenbereichs von zwischen 500 Nanometern und 750 Nanometern bestimmt.

Damit wird vorrangig Gewebe bewertet, das unmittelbar auf der Oberfläche der Biopsie-Probe liegt.

Bei einer alternativen Weiterbildung dieser Ausführungsform wird der spektrale Erfassungsbereich für eine hyperspektrale Tiefenerfassung als Teilbereich eines Wellenlängenbereichs von zwischen 750 Nanometern und 1000 Nanometern bestimmt. Damit wird in die Bewertung auch Gewebe einbezogen, das unterhalb der Oberfläche der Biopsie-Probe liegt, typischerweise bis zu einer Tiefe von zwischen einem und fünf Millimetern. Somit können auch tumoröse Gewebeabschnitte erkannt werden, die bei oberflächlicher Inspektion der Biopsie-Probe verborgen bleiben. Damit kann die Zuverlässigkeit einer Entscheidung über eine Nachresektion verbessert werden.

Bei einer Ausführungsform des Verfahrens werden Oberflächenpunkte des optischen Biopsie-Modells abhängig von dem jeweils zugeordneten tumorrelevanten Segmentierungswert visuell unterscheidbar dargestellt. Beispielsweise können Bereiche des optischen Biopsie-Modells abhängig von dem Segmentierungswert farblich markiert werden (beispielsweise rot für Gewebe, das als tumorös klassifiziert wurde und grün für Gewebe, das als tumorfrei klassifiziert wurde). Dies ermöglicht eine besonders leichte räumliche Orientierung eines Operateurs bei einer Nachresektion.

Bei einer Weiterbildung dieser Ausführungsform wird das mit Segmentierungswerten überlagerte optische Biopsie-Modell mit Virtual Reality (VR) oder Augmented Reality (AR) Verfahren visuell dargeboten. Dabei können zusätzlich zur Darstellung der Segmentierungswerte ergänzende Tumorinformationen dargestellt werden. Auch eine Überlagerung mit der in-situ Situation des Operationsfeldes mit den verbliebenen Schnitträndern ist möglich. Die Überlagerung kann optisch oder anhand von Aufnahmen der in-situ Situation erfolgen.

Bei einer Ausführungsform des Verfahrens ist die Auswerteeinheit als Convolutional Neural Network (CNN) ausgebildet. CNNs ermöglichen eine besonders flexible Transformation von Hypercubes in Segmentierungskarten und sind besonders leicht trainierbar, beispielsweise mit Verfahren des Deep Learning. Dadurch können auch analytisch sehr komplexe Zusammenhänge zwischen der spektralen Charakteristik eines Gewebes und einem zuzuordnenden Tumorstatus leicht und anhand vergleichsweise weniger annotierter Beispiele erfasst werden.

Gemäß einem zweiten Aspekt der Erfindung umfasst eine Vorrichtung zur tumorrelevanten Segmentierung einer Biopsie-Probe eine HSI-Kamera und eine zur Aufnahme einer Biopsie-Probe eingerichtete Haltevorrichtung.

Die HSI-Kamera und die Haltevorrichtung sind derart gegeneinander bewegbar, dass anhand von reflektiven Intensitätsbildern, die mittels der HSI-Kamera aus verschiedenen Positionen und/oder in verschiedenen Ausrichtungen gegenüber der Haltevorrichtung von einer in der Haltevorrichtung aufgenommenen Biopsie-Probe erfasst werden, die Oberfläche der Biopsie-Probe mindestens teilweise durch ein Verfahren der fotogrammetrischen Rekonstruktion dreidimensional erfassbar ist.

Ferner umfasst die Vorrichtung mindestens eine Recheneinheit, die zur Ausführung eines Verfahrens gemäß dem ersten Aspekt der Erfindung eingerichtet ist.

Eine derartige Vorrichtung ist platzsparend und kompakt und kann auch transportabel ausgebildet sein. Dadurch kann sie sowohl innerhalb eines Operationssaals, aber auch räumlich unabhängig davon aufgestellt werden. Insbesondere kann dadurch ein direkter Kontakt mit einem Patienten vermieden werden, so dass viele für Medizingeräte innerhalb der Patientenumgebung vorgeschriebene Anforderungen entfallen können. Weitere Vorteile entsprechen den Vorteilen des Verfahrens gemäß dem ersten Aspekt der Erfindung.

Bei einer Ausführungsform umfasst die Haltevorrichtung und/oder die HSI-Kamera eine Sensorik, die zur mindestens teilweisen Bestimmung der Lage und/oder Ausrichtung der HSI-Kamera relativ zur Haltevorrichtung eingerichtet ist. Damit gewonnene Lage- und/oder Ausrichtungsparameter können vorteilhaft für ein besonders einfaches und zuverlässiges fotogrammetrisches Rekonstruktionsverfahren verwendet werden.

Ausführungsbeispiele der Erfindung werden im Folgenden anhand von Zeichnungen näher erläutert. Darin zeigen:
- Figur 1: schematisch ein HSI-System mit einer HSI-Kamera und einer Auswerteeinheit,
- Figur 2: schematisch einen Ablaufplan für ein Verfahren zum maschinellen Lernen einer Auswerteeinheit und
- Figur 3: schematisch ein für den intraoperativen Einsatz eingerichtetes HSI-System.

Einander entsprechende Teile sind in allen Figuren mit den gleichen Bezugszeichen versehen.

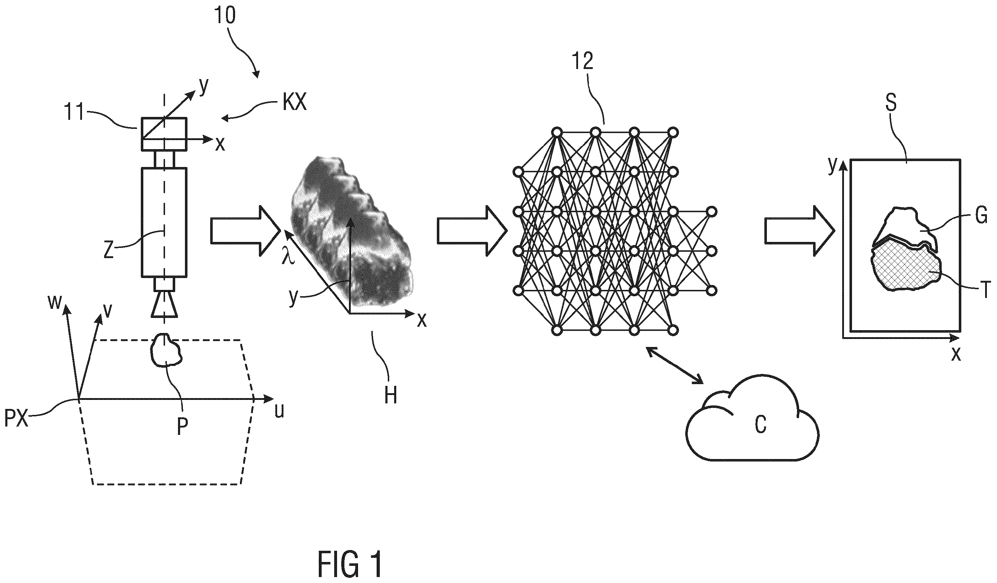

Figur 1 zeigt schematisch ein Hyperspektral-Imaging (HSI) System 10 umfassend eine HSI-Kamera 11 und eine Auswerteeinheit 12. Die HSI-Kamera 11 ist zur Erfassung einer intraoperativ entnommenen Biopsie-Probe P in einer nachfolgend noch genauer erklärten Weise eingerichtet. Die Auswerteeinheit 12 ist als Klassifikator 12 ausgebildet, der mit einem Verfahren des maschinellen Lernens anpassbar ist. Beispielsweise kann die Auswerteeinheit 12 als ein Faltungsnetzwerk (Convolutional Neural Network, CNN, 12) ausgebildet sein, das beispielsweise auf einem Rechner oder auf einer Grafikkarte eines Rechners implementiert ist. Die Auswerteeinheit 12 kann aber auch als Expertensystem oder als regelbasiertes Verfahren ausgebildet sein, das Entscheidungen anhand von Parametern (beispielsweise Schwellwerten oder Kombinationen von Schwellwerten) trifft, die in einem Training anpassbar sind.

Die HSI-Kamera 11 erfasst in einem Hypercube H multispektrale Daten bezogen auf ein Kamera-Koordinatensystem KX mit einer ersten Kamerakoordinate x und einer zweiten Kamerakoordinate y, die eine Kamerabildebene senkrecht zur optischen Achse Z der HSI-Kamera 11 aufspannen.

Der Hypercube H umfasst für jedes Paar von Kamerakoordinaten x, y eine Mehrzahl von Intensitätswerten, die jeweils einer Wellenlänge *λ* zugeordnet sind. Mit anderen Worten: für jede der Wellenlängen *λ* enthält der Hypercube H eine zweidimensionale (entlang der Kamerakoordinaten x, y ausgerichtete) Verteilung von Intensitätswerten. Bekannte, kommerziell verfügbare HSI-Kameras 11 liefern Bilder mit einer spektralen Auflösung von 5 Nanometer über einen Wellenlängenbereich von zwischen 400 Nanometer bis 1700 Nanometer. Für die Unterscheidung zwischen gesundem und potenziell tumorösem Gewebe G hat sich ein Wellenlängenbereich von zwischen 500 Nanometern bis 1000 Nanometern als besonderes wirksam herausgestellt.

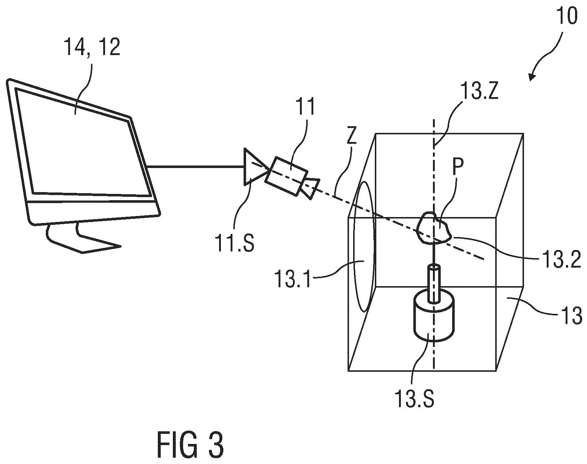

Die Biopsie-Probe P wird in einem Proben-Koordinatensystem PX fixiert, das eine erste bis dritte Probenkoordinate u, v, w umfasst, die zueinander senkrecht ausgerichtet sind. Die Biopsie-Probe P kann gegenüber der HSI-Kamera 11 durch Translation und/oder Kippung bewegt werden, beispielsweise durch Lageveränderung der HSI-Kamera 11 und/oder Lageveränderung einer in Figur 1 nicht näher bezeichneten Probenaufnahme relativ zu einem Weltkoordinatensystem. Als vorteilhaft hat sich die Drehung der Biopsie-Probe P um eine in Figur 3 noch näher beschriebene Drehachse 13.Z und eine Schwenkung der HSI-Kamera 11 relativ zu dieser Drehachse 13.Z herausgestellt.

Für eine Biopsie-Probe P wird somit eine Mehrzahl von Hypercubes H aufgenommen, während zwischen den Aufnahmen die HSI-Kamera 11 und die Biopsie-Probe P relativ zueinander so bewegt werden, dass die dreidimensionale Oberfläche der Biopsie-Probe P nach Möglichkeit vollständig, mindestens aber teilweise erfasst wird, wobei sich jeweils mindestens zwei Aufnahmen überlappen oder aneinander anstoßen.

Korrespondierend zu jedem der Hypercubes H nimmt die HSI-Kamera 11 ein reflektives Intensitätsbild auf, das denselben Teilbereich der Oberfläche der Biopsie-Probe P erfasst wie der korrespondierende Hypercube H. Beispielsweise kann das Intensitätsbild als Farbbild mit einer konventionellen Rot - Grün - Blau (RGB) Sensorik der HSI-Kamera 11 erfasst werden, die von der Erfassung der spektralen Intensitätswerte unabhängig ist. Ein derartiges korrespondierendes Farbbild kann aber auch rechnerisch aus einem Hypercube H ermittelt werden, indem spektrale Intensitätswerte gemäß der farbbezogenen spektralen Empfindlichkeit einer typischen RGB Sensorik gewichtet aufsummiert werden.

Alternativ kann an Stelle eines Farbbildes ein Intensitätsbild auch als Grauwertbild aufgenommen oder berechnet werden.

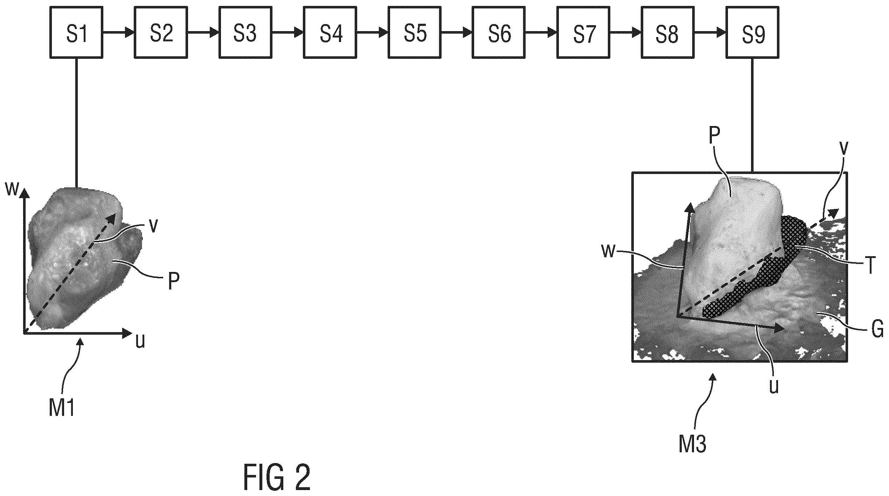

Aus der Mehrzahl von der einander überlappenden (oder mindestens aneinander anstoßenden) Intensitätsbildern wird durch ein fotogrammetrisches Rekonstruktionsverfahren ein optisches Biopsie-Modell M1 berechnet, das in Figur 1 nicht im Detail dargestellt ist, nachfolgend in Figur 2 aber noch genauer erläutert wird. Ein derartiges optisches Biopsie-Modell M1 ordnet der dreidimensional geformten Oberfläche der Biopsie-Probe P mindestens teilweise optische Oberflächenpunkte zu, denen jeweils ein Intensitätswert (beispielsweise ein Farbwert oder ein Grauwert) zugewiesen ist.

Mit anderen Worten: das optische Biopsie-Modell M1 erfasst die visuelle äußere Erscheinung der Biopsie-Probe P mindestens für Teilbereiche von deren Oberfläche. Dadurch ermöglicht es einerseits die Orientierung relativ zur in-situ Situation (das heißt, die Lagebestimmung der Biopsie-Probe P relativ zu den Schnitträndern eines in Figur 2 näher dargestellten verbliebenen Gewebes G). Andererseits ermöglicht das optische Biopsie-Modell M1 die Orientierung relativ zu histologischen Schnitten durch die Biopsie-Probe P, wie nachfolgend noch genauer erläutert wird.

Beim Training der Auswerteeinheit 12 mit einem Verfahren des maschinellen Lernens (beispielsweise beim Training eines CNN mittels Deep Learning) wird einem Hypercube H jeweils eine Segmentierungskarte S zugeordnet.

Die Segmentierungskarte S erfasst eine Segmentierungsinformation entlang der Kamerakoordinaten x, y korrespondierend zum Hypercube H. Mit anderen Worten: ein Hypercube H und die dazu korrespondierende Segmentierungskarte S sind über dem gleichen Bereich von Kamerakoordinaten x, y definiert. Bevorzugt, aber nicht zwingend, weisen der Hypercube H und die Segmentierungskarte S auch eine gleich Ortsauflösung (im Sinne eines Pixelabstands) auf.

Beispielsweise kann die Segmentierungskarte S für eine gewisse Position mit den Kamerakoordinaten x, y erfassen, ob an dieser Position des Hypercubes H gesundes Gewebe G (erster Segmentierungswert), Tumorgewebe (zweiter Segmentierungswert, Tumorbereich T) oder Hintergrund (dritter Segmentierungswert) erfasst wurde.

Derartige Segmentierungskarten S können beispielsweise durch eine manuelle histologische Untersuchung durch klinische Experten, beispielsweise Pathologen, gewonnen werden. Hierzu werden beispielsweise, wie nachfolgend noch genauer erläutert wird, histologische Schnittbilder durch die Biopsie-Probe P angefertigt und annotiert. Für ausreichend dicht beabstandete Schnittbilder kann somit ausreichend kleinen Voxeln der Biopsie-Probe P ein tumorrelevanter Segmentierungswert zugeordnet werden. Außer histologischen Schnitten sind jedoch auch beliebige andere Diagnoseverfahren einsetzbar, die mindestens oberflächennahen Voxel der Biopsie-Probe P Segmentierungswerte zuordnen.

Die im Inneren der Biopsie-Probe P liegenden Voxel sind zwar der histologischen Untersuchung, nicht jedoch der Erfassung durch die HSI-Kamera 11 zugänglich und sind insoweit für ein Training der Auswerteeinheit 12 nicht direkt verwendbar. Die histologische Untersuchung liefert jedoch auch Segmentierungswerte für oberflächliche oder oberflächennahe Voxel der Biopsie-Probe P.

Durch Abgleich der Biopsie-Probe P mit dem optischen Biopsie-Modell M1 kann die Lage der annotierten (in den Schnittbildern mit Segmentierungswerten versehenen) Voxel in dem optischen Biopsie-Modell M1 bestimmt werden. Dadurch wird jedem Oberflächenpunkt des Biopsie-Modells M1 ein Segmentierungswert zugeordnet.

Da die Zuordnung zwischen Oberflächenpunkten des optischen Biopsie-Modells M1 einerseits und Pixeln der Intensitätsbilder (Farbbilder, Grauwertbilder) andererseits aus der fotogrammetrischen dreidimensionalen Rekonstruktion bekannt ist, kann somit auch jedem Pixel eines reflektiven Intensitätsbildes ein Segmentierungswert zugeordnet werden.

Damit kann auch jedem Pixel eines zu diesem reflektiven Intensitätsbild korrespondierenden Hypercubes H ein Segmentierungswert zugeordnet werden. Somit liegen für jeden der (unter verschiedenen Betrachtungswinkeln der HSI-Kamera 11 relativ zur Biopsie-Probe P erfassten) Hypercubes H vollständige Segmentierungsinformationen vor, die in einer Segmentierungskarte S erfasst werden.

In einer Trainingsphase werden die Parameter der Auswerteeinheit 12 (beispielsweise Gewichte eines CNN 12) derart ermittelt, dass die vorgegebenen Segmentierungskarten S bestmöglich (im Sinne eines vorbestimmten Fehlerkriteriums, beispielsweise im Sinne einer minimalen quadratischen Abweichung) von der Auswerteeinheit 12 approximiert werden.

Rein beispielhaft kann eine als CNN ausgebildete Auswerteeinheit 12 eine Anzahl von Eingabeneuronen umfassen, die der Anzahl der Werte in einem Hypercube H entspricht. Umfasst ein Hypercube H Daten für *m* verschiedene Werte der ersten Koordinate x: *x*₁, *x*₂, ... *xₘ*, *n* verschiedene Werte der zweiten Koordinate y: *y*₁, *y*₂, ... *yₙ* sowie für jedes Paar von Koordinaten (*xᵢ*, *yᵢ*)_{*i*=1},₂,_{...*m j*=1},_{2,...*n*} jeweils *l* verschiedene Werte der Wellenlänge *λ*: *λ*₁,*λ*₂ ...*λₗ*, so könnte ein zugeordnetes CNN 12 *n* × *m* × *l* Eingabeneuronen umfassen.

Es ist aber auch möglich, dass aus einem Hypercube H gewisse, hinsichtlich einer Segmentierung in tumoröses und gesundes Gewebe G besonders relevante Informationen extrahiert wurden, um die Eingabedimension des CNN 12 zu reduzieren.

In seiner Ausgabeschicht kann das zugeordnete CNN 12 entsprechend der vorgesehenen Anzahl s von Segmentierungswerten (beispielsweise korrespondierend zu den Kategorien "Tumorgewebe", "gesundes Gewebe", "Hintergrund") dann *n* × *m* × *s* Ausgabeneuronen umfassen. Alternativ ist auch die Kodierung von mehreren Segmentierungswerten durch ein einziges Ausgabeneuron möglich, so dass das CNN 12 nur *n* × *m* Ausgabeneuronen umfasst.

Nachfolgend auf die Trainingsphase wird in einer Klassifikationsphase die angepasste Auswerteeinheit 12 (beispielsweise ein CNN mit angepassten Gewichten) zur Segmentierung einer Biopsie-Probe P anhand eines daraus gewonnenen Hypercubes H angewendet. Diese Segmentierung erfolgt in Echtzeit und eignet sich somit insbesondere für einen intraoperativen Einsatz.

Das Training der Auswerteeinheit 12 kann lokal erfolgen, das heißt: auf einer nachfolgend in Figur 3 näher erläuterten Recheneinheit 14 (Computer, Grafikkarte oder ähnliches) des HSI-Systems 10, die auch für die Klassifikationsphase genutzt wird. Da der Rechenaufwand für ein maschinelles Lernen beispielsweise eines CNN 12 anhand einer Vielzahl von Hypercubes H den Rechenaufwand für eine Klassifikation eines einzelnen Hypercube H ganz wesentlich übersteigt, wird es sich als vorteilhaft erweisen, das maschinelle Lernen unabhängig von einer Recheneinheit 14 des HSI-Systems 10 durchzuführen, beispielsweise in einer Cloud C. Unabhängig davon kann auch die Klassifikation auf einer Recheneinheit 14 erfolgen, die räumlich von der HSI-Kamera 11 getrennt ist, beispielsweise auf einem Server in einer Cloud C, an den die Hypercubes H gesendet werden.

Die während des Trainings gewonnenen Parameter (beispielsweise die Gewichte des CNN 12) werden anschließend an die Auswerteeinheit 12 übertragen. Das Training kann auch wiederholt werden, um die Genauigkeit des HSI-Systems 10 fortlaufend zu verbessern.

Figur 2 zeigt rein schematisch einen Ablaufplan für ein Verfahren zum maschinellen Lernen der Auswerteeinheit 12.

In einem ersten Schritt S1 wird eine Biopsie-Probe P von der HSI-Kamera 11 aus verschiedenen Raumwinkeln erfasst. Beispielsweise wird die optische Achse Z der HSI-Kamera 11 unter verschiedenen Betrachtungswinkeln auf einen definierten Punkt des Proben-Koordinatensystems PX ausgerichtet. Die Ausrichtung kann durch Bewegen der HSI-Kamera 11 und/oder durch Bewegen der Biopsie-Probe P relativ zu einem Weltkoordinatensystem erfolgen. Die Betrachtungswinkel werden so gewählt, dass jeder für die Diagnose relevante Teilbereich der Oberfläche der Biopsie-Probe P unter mindestens einem Betrachtungswinkel von der HSI-Kamera 11 erfasst wird.

Für jeden Betrachtungswinkel wird von der HSI-Kamera 11 mindestens ein Hypercube H sowie ein korrespondierendes Intensitätsbild (beispielsweise als Farbbild oder Grauwertbild) bereitgestellt. Der Hypercube H und das korrespondierende Intensitätsbild werden über demselben Bereich von Kamerakoordinaten x, y erfasst.

Aus der Mehrzahl reflektiver Intensitätsbilder wird im nachfolgenden zweiten Schritt S2 ein dreidimensionales optisches Biopsie-Modell M1 der Biopsie-Probe P durch ein fotogrammetrisches Rekonstruktionsverfahren erstellt. Das dreidimensionale optische Biopsie-Modell M1 erfasst das optische (visuelle) Aussehen der Biopsie-Probe P, indem es jedem Punkt der Oberfläche der Biopsie-Probe P eine Intensitäts- und Farbinformation zuordnet, beispielsweise als Tripel von Rot-, Grün- und Blau-Intensitätswerten.

Die fotogrammetrische Rekonstruktion kann unter Verwendung einer Lagebeziehung zwischen dem Kamera-Koordinatensystem KX und dem Proben-Koordinatensystem PX durchgeführt werden, indem beispielsweise bei der Aufnahme eines Hypercubes H und eines korrespondierenden Intensitätsbilds die Ausrichtung der optischen Achse der HSI-Kamera 11, ein Abstand der Bildebene und/oder ein Abbildungsmaßstab erfasst werden. Eine derartige fotogrammetrische Rekonstruktion ist besonders genau.

Die fotogrammetrische Rekonstruktion kann jedoch auch unter Verzicht auf eine solche Lagebeziehung durchgeführt werden, indem Ähnlichkeiten zwischen Intensitätsbildern ausgewertet werden, die aus unterschiedlichen Betrachtungswinkeln aufgenommen wurden und die Teiloberflächen der Biopsie-Probe P erfassen, welche sich teilweise überlappen.

Optional und zusätzlich kann in dem zweiten Schritt S2 anhand der Hypercubes H ein dreidimensionales HSI-Modell erfasst werden. Das dreidimensionale HSI-Modell ordnet jedem Punkt der Oberfläche der Biopsie-Probe P eine spektrale Information zu, beispielsweise als einen Vektor von Intensitäten, die von der HSI-Kamera 11 für diesen Punkt für gewisse Wellenlängen *λ*₁, *λ*₂, ... *λₗ* erfasst wurden.

In einem nachfolgenden dritten Schritt S3 wird die Biopsie-Probe P durch Kryoschneiden in koplanare Schnitte geschnitten. Beispielsweise sind die koplanaren Schnitte in gleichen Abständen entlang der dritten Proben-Koordinate w ausgeführt.

Alternativ können Schnitte durch eine Formalin-fixierte, Paraffin-eingebettete (FFPE) Biopsie-Probe P entnommen werden.

In einem nachfolgenden vierten Schritt S4 werden die einzelnen Schnitte durch Hämatoxylin-Eosin-Färbung oder ein anderes Färbeverfahren eingefärbt, das eine gute visuelle Unterscheidung von tumorösem und tumorfreiem Gewebe G erlaubt.

In einem nachfolgenden fünften Schritt S5 wird jeder der eingefärbten Schnitte optisch gescannt (das heißt, in ein Farb-Schnittbild überführt, das jedem Punkt der Schnittebene einen Pixel-Farbwert, beispielsweise ein Tripel von Rot-, Grün- und Blau-Intensitätswerten zuordnet).

In einem nachfolgenden sechsten Schritt S6 werden die gescannten Farb-Schnittbilder durch einen klinischen Experten annotiert, indem jedem Pixel ein Segmentierungswert (beispielsweise korrespondierend zu den Kategorien "Tumorgewebe", "gesundes Gewebe", "Hintergrund") zugeordnet wird.

An Stelle des dritten bis sechsten Schritts S3 bis S6 sind auch andere histologische dreidimensionale Untersuchungsverfahren möglich, die einer räumliche Zuordnung von tumorrelevanten Segmentierungswerten zu den von der Oberfläche der Biopsie-Probe P umfassten Voxeln ermöglichen.

In einem nachfolgenden siebenten Schritt S7 wird aus der Gesamtheit der annotierten Farb-Schnittbilder (alternativ aus der Gesamtheit der annotierten Voxel der Biopsie-Probe P) ein dreidimensionales histologisches Biopsie-Modell gebildet. Dieses ordnet jedem von der Oberfläche der Biopsie-Probe P umschlossenen Punkt oder Voxel einen Segmentierungswert zu.

In einem nachfolgenden achten Schritt S8 wird die Auswerteeinheit 12 mittels maschinellen Lernens anhand des dreidimensionalen histologischen Biopsie-Modells angepasst. Hierzu werden die Segmentierungswerte von Oberflächenpunkten des dreidimensionalen histologischen Biopsie-Modells auf Segmentierungskarten S übertragen, die in Lage und Ausdehnung jeweils gleich zur Lage und Ausdehnung eines Intensitätsbildes angeordnet sind, das dem dreidimensionalen optischen Biopsie-Modell M1 zugrunde gelegt wurde.

Mit anderen Worten: jedem der im ersten Schritt S1 aufgenommenen reflektiven Intensitätsbilder, und somit auch jedem der korrespondierend dazu aufgenommenen Hypercubes H, wird eine Segmentierungskarte S zugeordnet. Eine Segmentierungskarte S ordnet jedem Paar von Kamerakoordinaten x, y eines Hypercubes H mindestens einen Segmentierungswert zu. Die Gesamtheit der derart ermittelten Hypercubes H mit zugeordneten Segmentierungskarten S bildet den Trainingssatz für das maschinelle Lernen der Auswerteeinheit 12.

Die Auswerteeinheit 12 wird derart trainiert, dass zu einem am Eingang angelegten Hypercube H eine Ausgabe erzeugt wird, die für den Trainingssatz bestmöglich (gemäß einem vorbestimmten Lernfehler-Kriterium, beispielsweise im Sinne eines quadratischen Lernfehlers) mit der zugeordneten Segmentierungskarte S übereinstimmt.

In einem nachfolgenden neunten Schritt S9 wird durch Überlagerung der Ausgabe der trainierten Auswerteeinheit 12 über das optische Biopsie-Modell M1 ein dreidimensionales Segmentierungs-Modell M3 erzeugt. Dieses ordnet jedem Punkt der Oberfläche des optischen Biopsie-Modells M1, und somit jedem Punkt eines von dem optischen Biopsie-Modell M1 erfassten Teils der Oberfläche der Biopsie-Probe P mindestens einen Segmentierungswert zu, der von der trainierten Auswerteeinheit 12 anhand der für diesen Punkt von mindestens einem Hypercube H erfassten spektralen Information ermittelt wird.

Das dreidimensionale Segmentierungs-Modell M3 ermöglicht eine visuelle Erkennung eines oder mehrerer Tumorbereiche T. Ein Tumorbereich T ist als Menge zusammenhängender Pixel auf der Oberfläche der Biopsie-Probe P repräsentiert, denen ein Segmentierungswert "tumoröses Gewebe" (oder ein vergleichbarer Segmentierungswert, der die Notwendigkeit einer weiteren Resektion anzeigt) zugeordnet wurde.

In der Trainingsphase müssen alle Schritte S1 bis S9 durchlaufen werden, um die Auswerteeinheit 12 anzupassen. In einer anschließenden Klassifikations- oder Arbeitsphase ist es jedoch ausreichend, den ersten Schritt S1zur Gewinnung des optischen Biopsie-Modells M1 und den zweiten Schritt S2 zur Gewinnung des dreidimensionalen HSI-Modells auszuführen und anschließend mit der bereits trainierten Auswerteeinheit 12 den neunten Schritt S9 auf das dreidimensionale HSI-Modell anzuwenden.

Dadurch kann eine zeitaufwändige histologische Biopsie eingespart werden. Auch eine intraoperative Schnellschnittdiagnostik ist nicht mehr erforderlich. Durch die Überlagerung der Segmentierungswerte in dem dreidimensionalen optischen Biopsie-Modell M1 können zudem die Schnittkanten der Biopsie-Probe P sehr leicht zu dem verbliebenen Gewebe G zugeordnet werden. Einem Operateur ist damit eine besonders leichte und zuverlässige Orientierung in der in-vivo Situation möglich.

Figur 3 zeigt schematisch ein HSI-System 10, das für einen intraoperativen Einsatz eingerichtet ist. Das HSI-System 10 umfasst eine HSI-Kamera 11 und eine Haltevorrichtung 13, die zur Aufnahme der Biospie-Probe P eingerichtet ist.

Vorliegend ist die Haltevorrichtung 13 als Kühlbox 13 ausgebildet, die zur Kühlung der Biopsie-Probe P auf eine Temperatur von beispielsweise -10 Grad Celsius eingerichtet ist. Die Kühlbox 13 weist eine Öffnung 13.1 auf, die für den Wellenlängenbereich optisch transparent ist, der von der HSI-Kamera 11 erfasst wird.

Ferner weist die Haltevorrichtung 13 einen Drehteller 13.2 auf, auf dem die Biopsie-Probe P abgelegt oder fixiert werden kann. Der Drehteller 13.2 ist um eine Drehachse 13.Z (die den Drehteller 13.2 senkrecht und mittig durchstößt) motorisch drehbar.

Die HSI-Kamera 11 erfasst durch die Öffnung 13.1 einen Teilbereich der Oberfläche der Biopsie-Probe P entlang ihrer optischen Achse Z (welche senkrecht zur Kamerabildebene der HSI-Kamera 11 verläuft). Die HSI-Kamera 11 ist gegenüber der Drehachse 13.Z schwenkbar. Somit können durch Drehen des Drehtellers 13.2 und Schwenken der HSI-Kamera 11 verschiedene Ansichten der Biopsie-Probe P mit jeweils einem Hypercube H und einem reflektiven Intensitätsbild erfasst werden, wobei das reflektive Intensitätsbild (beispielsweise als RGB-Farbbild) unabhängig von dem Hypercube H erfasst oder rechnerisch daraus ermittelt werden kann.

Zwischen der Erfassung der Ansichten (mit jeweils einem Hypercube H und einem reflektiven Intensitätsbild) wird der Drehteller 13.2 wird derart gedreht und/oder die HSI-Kamera 11 derart geschwenkt, dass ein interessierender Teilbereich der Oberfläche der Biopsie-Probe P vollständig erfasst wird. Dabei werden einander mindestens teilweise überdeckende Ansichten erfasst, die eine dreidimensionale Rekonstruktion des interessierenden Teilbereichs der Oberfläche mittels eines fotogrammetrischen Rekonstruktionsverfahrens ermöglichen.

Das HSI-System 10 umfasst ferner eine Recheneinheit 14, die beispielsweise als leistungsstarker Personal Computer (PC) ausgebildet sein kann. Die Recheneinheit 14 ist mit der HSI-Kamera 11 verbunden und zum Einzug von Hypercubes H und reflektiven Intensitätsbildern eingerichtet. Ferner ist die Recheneinheit 14 zur Ausführung eines vorangehend anhand der Figuren 1 und 2 bereits erläuterten Verfahrens eingerichtet.

Zur Unterstützung des fotogrammetrischen Rekonstruktionsverfahrens können die HSI-Kamera 11 (oder eine baulich davon getrennte Kamerahalterung, die in Figur 3 nicht näher dargestellt ist) und/oder die Haltevorrichtung 13 eine Sensorik 11.S, 13.S aufweisen, die zur Erfassung der Lage- und Ausrichtungsbeziehung zwischen der HSI-Kamera 11 und der Haltevorrichtung 13 eingerichtet ist. Die Sensorik 11.S, 13.S kann beispielsweise Drehwinkelgeber, Abstandssensoren oder optische Sensoren in Verbindung mit optischen Markierungen umfassen. Damit ist eine besonders genaue und zuverlässige fotogrammetrische Rekonstruktion möglich. Aber auch ohne eine derartige Sensorik 11.S, 13.S kann anhand der Bildinhalte der einander mindestens teilweise überlappenden reflektiven Intensitätsbilder eine dreidimensionale fotogrammetrische Rekonstruktion des interessierenden Bereichs der Oberfläche der Biopsie-Probe P erfolgen.

### BEZUGSZEICHENLISTE

- 10: Hyperspektral-Imaging (HSI) System
- 11: HSI-Kamera
- 11.S: Sensorik
- 12: Auswerteeinheit, Convolutional Neural Network CNN, Klassifikator
- 13: Haltevorrichtung, Kühlbox
- 13.1: Öffnung
- 13.2: Drehteller
- 13.S: Sensorik
- 13.Z: Drehachse
- 14: Recheneinheit
- C: Cloud
- G: Gewebe
- H: Hypercube
- KX: Kamera-Koordinatensystem
- M1: optisches Biopsie-Modell
- M3: Segmentierungs-Modell
- P: Biopsie-Probe
- PX: Proben-Koordinatensystem
- S: Segmentierungskarte
- S1 bis S9: erster bis neunter Schritt
- T: Tumorbereich
- u, v, w: erste bis dritte Proben-Koordinate
- x, y: erste, zweite Kamerakoordinate
- Z: optische Achse
- *λ*: Wellenlänge

## Patentansprüche

1. Verfahren zur Zuordnung mindestens eines tumorrelevanten Segmentierungswertes zu jeweils einem Oberflächenpunkt einer Biopsie-Probe (P), wobei in einer Klassifikationsphase
- mit einer Hyperspektral-Imaging (HSI) Kamera (11) die Oberfläche der Biopsie-Probe (P) mindestens teilweise dreidimensional und multispektral erfasst wird, indem
∘ mehrere Hypercubes (H) in jeweils einer Kamerabildebene aus verschiedenen Positionen und/oder in verschiedenen Ausrichtungen der HSI Kamera (11) gegenüber der Biopsie-Probe (P) erfasst werden, wobei ein Hypercube (H) jeweils einem Pixel der Kamerabildebene eine Mehrzahl von spektralen Intensitätswerten innerhalb eines spektralen Erfassungsbereichs zuordnet, wobei jeder spektrale Intensitätswert summarisch über eine von dem spektralen Erfassungsbereich abhängige, auf einen Oberflächenpunkt der Biopsie-Probe (P) bezogene Eindringtiefe bestimmt wird und
∘ korrespondierend zu jedem Hypercube (H) ein reflektives Intensitätsbild erfasst oder aus dem Hypercube (H) ermittelt wird, das jeweils einem Pixel der Kamerabildebene einen reflektiven Intensitätswert zuordnet,
- aus der Mehrzahl der reflektiven Intensitätsbilder durch ein Verfahren der fotogrammetrischen Rekonstruktion ein dreidimensionales optisches Biopsie-Modell (M1) generiert wird, das einem von mindestens einem Hypercube (H) erfassten Oberflächenpunkt der Biopsie-Probe (P) jeweils einen reflektiven Intensitätswert zuordnet,
- ein Hypercube (H) mittels einer mit einem Verfahren des maschinellen Lernens trainierten Auswerteeinheit (12) in jeweils eine Segmentierungskarte (S) transformiert wird, die jedem Pixel der Kamerabildebene des Hypercubes (H) einen tumorrelevanten Segmentierungswert zuordnet,
- die Segmentierungswerte der Segmentierungskarten (S) auf jeweils denjenigen Oberflächenpunkt des optischen Biopsie-Modells (M1) übertragen werden, der gemäß der fotogrammetrischen Rekonstruktion dem jeweiligen Pixel der Kamerabildebene zugeordnet ist, wobei in einer Trainingsphase
- aus der Biopsie-Probe (P) durch ein histologisches Schnittverfahren eine Mehrzahl von koplanar angeordneten, vorzugsweise äquidistant beabstandeten histologischen Schnitten gewonnen wird,
- aus einem histologischen Schnitt durch Färben und Scannen jeweils ein Schnittbild gewonnen wird,
- den Pixeln der Schnittbilder durch Annotation jeweils ein tumorrelevanter Segmentierungswert zugeordnet wird,
- aus den mit Segmentierungswerten annotierten Schnittbildern ein dreidimensionales histologisches Biopsie-Modell gewonnen wird und
- die Auswerteeinheit (12) mit einem Verfahren des maschinellen Lernens derart angepasst wird, dass einem am Eingang der Auswerteeinheit (12) präsentierten Hypercube (H) eine Segmentierungskarte (S) mit tumorrelevanten Segmentierungswerten zugeordnet wird, die mit den Segmentierungswerten des dreidimensionalen histologischen Biopsie-Modells nach einem vorbestimmten Lernfehlerkriterium bestmöglich übereinstimmt.

2. Verfahren nach Anspruch 1, **dadurch gekennzeichnet, dass** für jedes Intensitätsbild die Lage und/oder Ausrichtung der Biopsie-Probe (P) relativ zu der HSI-Kamera (11) erfasst wird und das dreidimensionale optische Biopsie-Modell (M1) aus der Mehrzahl der Intensitätsbilder durch ein Verfahren der fotogrammetrischen Rekonstruktion unter Berücksichtigung dieser Lage und/oder Ausrichtung ermittelt wird.

3. Verfahren nach einem der vorhergehenden Ansprüche, **dadurch gekennzeichnet, dass** der spektrale Erfassungsbereich abhängig von einer Eindringtiefe bestimmt wird.

4. Verfahren nach Anspruch 3, **dadurch gekennzeichnet, dass** der spektrale Erfassungsbereich für eine oberflächennahe hyperspektrale Erfassung als Teilbereich eines Wellenlängenbereichs von zwischen 500 Nanometern und 750 Nanometern bestimmt wird.

5. Verfahren nach Anspruch 3 oder 4, **dadurch gekennzeichnet, dass** der spektrale Erfassungsbereich für eine hyperspektrale Tiefenerfassung als Teilbereich eines Wellenlängenbereichs von zwischen 750 Nanometern und 1000 Nanometern bestimmt wird.

6. Verfahren nach einem der vorhergehenden Ansprüche, **dadurch gekennzeichnet, dass** Oberflächenpunkte des optischen Biopsie-Modells (M1) abhängig von dem zugeordneten tumorrelevanten Segmentierungswert visuell unterscheidbar dargestellt werden.

7. Verfahren nach einem der vorhergehenden Ansprüche, **dadurch gekennzeichnet, dass** die Auswerteeinheit (12) als Convolutional Neural Network (CNN) ausgebildet ist.

8. Vorrichtung zur tumorrelevanten Segmentierung einer Biopsie-Probe (P) umfassend
- eine HSI-Kamera (11) und eine zur Aufnahme einer Biopsie-Probe (P) eingerichtete Haltevorrichtung (13), wobei
- die HSI-Kamera (11) und die Haltevorrichtung (13) derart gegeneinander bewegbar sind, dass anhand von reflektiven Intensitätsbildern, die mittels der HSI-Kamera (11) aus verschiedenen Positionen und/oder in verschiedenen Ausrichtungen gegenüber der Haltevorrichtung (13) von einer in der Haltevorrichtung (13) aufgenommenen Biopsie-Probe (P) erfasst werden, die Oberfläche der Biopsie-Probe (P) mindestens teilweise durch ein Verfahren der fotogrammetrischen Rekonstruktion dreidimensional erfassbar ist, sowie
- mindestens eine Recheneinheit (14), die zur Ausführung eines Verfahrens nach einem der vorhergehenden Ansprüche eingerichtet ist.

9. Vorrichtung nach Anspruch 8, **dadurch gekennzeichnet, dass** die Haltevorrichtung (13) und/oder die HSI-Kamera (11) eine Sensorik (11.S, 13.S) umfasst, die zur mindestens teilweisen Bestimmung der Lage und/oder Ausrichtung der HSI-Kamera (11) relativ zur Haltevorrichtung (13) eingerichtet ist.
